# EUROPEAN PATENT APPLICATION

(11) **EP 1 186 924 A2**
(43) Date of publication of application: **13.03.2002**
(21) Application number: 01117736.7
(22) Date of filing: 30.07.2001
(51) Int. Cl.: G02B 6/42

(54) **Optical signal reading apparatus using light leaked out of light transmission path**

(30) Priority: 05.09.2000 JP 2000268252
(71) Applicant: MATSUSHITA ELECTRIC INDUSTRIAL CO., LTD., Kadoma-shi, Osaka 571-8501 (JP)
(72) Inventor: Takeuchi, Yoshinori, Tama-shi, Tokyo 206-0031 (JP); Wakabayashi, Shinichi, Sagamihara-shi, Kanagawa 228-0814 (JP)
(74) Representative: Holmes, Miles Keeton

(57) **Abstract**

An index-of-refraction modulating structure is formed so that an optical signal propagating through an optical fiber slightly leaks. The structure is disposed close to a photoelectric converting element for reading the optical signal.

## Description

### FIELD OF THE INVENTION

The present invention relates to a reading apparatus for an optical signal propagating through a light waveguide or an optical fiber.

### BACKGROUND OF THE INVENTION

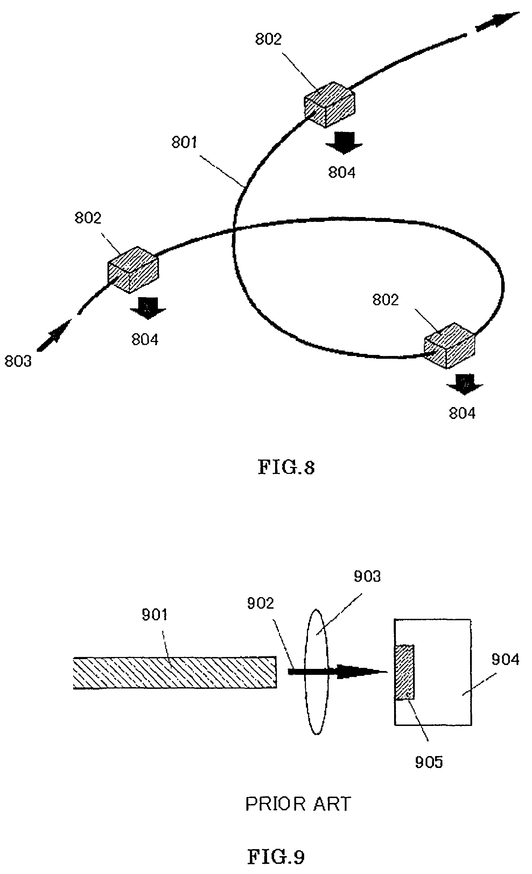

A light waveguide in which a structure for containing light using index difference of refraction and guiding the light is formed on a substrate and an optical fiber comprising a central core and a cladding for covering the core are conventionally used for propagating the light. Each of the light waveguide and the optical fiber is hereinafter collectively called a light transmission path. The light waveguide includes a dielectric light waveguide, a Si light waveguide, a polymer light waveguide, or a quartz light waveguide. Fig. 9 shows an apparatus for converting an optical signal propagating through the light transmission path to an electric signal and for reading the contents thereof. In this conventional example, optical fiber 901 through which the optical signal propagates is cut, and signal light 902 going out of the end surface of an optical fiber core is guided to photoelectric converting region 905 in photoelectric converting unit 904 directly or through an optical element such as lens 903. The light is photo-electrically converted to the electric signal in the converting region.

The conventional optical signal reading apparatus receives takes an optical signal out of the end surface of the optical fiber in order to read the optical signal propagating through the optical fiber. For propagating the read signal again in the optical signal form through the optical fiber, the optical signal reading apparatus must return the electric signal converted by the photoelectric converting unit to the optical signal and transmit it into the optical fiber. This structure requires light/electricity conversion and electricity /light conversion so that number of components becomes twice or more. In a multistage structure including a large number of reading units in one light transmission path, distortion due to the conversion is accumulated and the distortion or noise increases at an end part. In a system for interactively propagating the optical signal, two optical-signal reading apparatuses are required.

While, a method of adding a light branching apparatus to a front stage of the optical signal reading apparatus and guiding only a part of the optical signal to the optical signal reading apparatus is considered as a method of reading the optical signal with hardly affecting the optical signal propagating through the optical fiber. In this case, even the multistage structure does not noticeably increase distortion or noise. But, even this structure cannot adapt to the system for interactively propagating the optical signal, so that two optical signal reading apparatuses are required.

Non-examined Japanese Patent Application Number S54-1642, for example, discloses an optical fiber cable for leaking and radiating a part of signal power out of it and a communication method using the cable. This communication method is designed for addressing a problem that wave leaked by transmitting electromagnetic wave in a microwave band through a coaxial cable disturbs the other radio unit to cause a malfunction. In this conventional method, a cladding of the optical fiber cable is thinned sufficiently, index difference of refraction between a core and the cladding is decreased, the optical fiber cable is bent so as to form a sharpened part, and light partially radiated from the sharpened part is detected.

Non-examined Japanese Patent Application Number S62-8108 discloses another conventional example of taking light out of an optical fiber. In this example, a cladding of the optical fiber is cut at a plurality of positions, a grating having selective different wavelength is formed at each cut position, and light is selectively leaked through the grating. This example provides an inexpensive light-wavelength distributor that has a simple structure comprising a smaller number of components. However, the cladding of this optical fiber must be cut for forming the gratings.

U.S Patent Number 5,299,045 discloses another conventional example, in which a light detector has a diffraction grating. The light detector increases wavelength multiplicity by setting wavelength bandwidth every wave in a wavelength multiplex communication, and detects wavelength fluctuation or the like of received light. This light detector has the diffraction grating in a semiconductor light waveguide, and an array of light detecting elements comprising a plurality of components receive light diffracted out of the light waveguide. The array of light detecting elements detect change of an emission angle of the diffracted light caused by the wavelength fluctuation of the incident light into the light waveguide. Based on the detection result, the light detector controls current injected into the light waveguide to adjust Bragg wavelength of the light waveguide. A predetermined distance, 10 mm shown in the example is required between the light waveguide and the array of light detecting elements. In other words, the light waveguide is separated from the array of light detecting elements. This example utilizes a following feature. Tolerance of an incident angle of a Bragg reflection condition expands when a light waveguide is thin. The Bragg reflection condition determines a direction in which diffracted light goes out concentratedly and strongly in a structure having periodically varying index of refraction. Therefore, even light propagating in an arrangement direction (hereinafter called a wave-number vector direction) of gratings that periodically change the index of refraction can diffract orthogonally to the wave-number vector direction of the diffraction grating. and . Taking out such diffracted light requires a light waveguide layer that is similar to one used for a semiconductor laser, has a wave-like interface between layers near it, and includes an extremely thin diffraction grating with effective thickness not larger than 0.2 µm.

U.S Patent Number 5,430,817 discloses another conventional example, in which a fiber grating is formed in a core of an optical fiber. This example includes long-period spectral shaping devices for preventing performance degradation of a light amplifier for amplifying an optical signal. The prevention is achieved by shifting unused pump energy in the light amplifier into a non-guided mode for removing the energy in an optical fiber communication system. The device comprises a long-period fiber grating having a plurality of index perturbations with a period distance between 50 µm and 1500 µm. This long-period fiber grating removes the pump energy not by light reflection but by conversion from guided modes of the core to the non-guided modes of claddings.

### SUMMARY OF THE INVENTION

An optical signal reading apparatus in accordance with the present invention addresses the problems discussed above. At least one of a core and a cladding of a light transmission path in the optical signal reading apparatus includes a structure in which index of refraction varies periodically along a light propagation axis so that a propagating optical signal slightly leaks. This structure is hereinafter called an index-of-refraction modulating structure. The leaking optical signal is read by a photoelectric converting element that is close to the index-of-refraction modulating structure and has a light-receiving surface in parallel with the light propagation axis.

The wave number vector direction of the index-of-refraction modulating structure is different from the light propagation axis direction of the light transmission path.

The part of the optical fiber in which the index-of-refraction modulating structure is formed is disposed at a predetermined position close to a photoelectric converting region in the photoelectric converting element.

### BRIEF DESCRIPTION OF THE DRAWINGS

Fig. 1 is a perspective view of an optical signal reading apparatus in accordance with a first exemplary embodiment of the present invention.
Fig. 2 is a perspective view of an optical signal reading apparatus in accordance with a third exemplary embodiment of the present invention.
Fig. 3 is a schematic sectional view of the optical signal reading apparatus in accordance with the first exemplary embodiment.
Fig. 4 is a schematic sectional view of the optical signal reading apparatus in accordance with the first exemplary embodiment.
Fig. 5 is a schematic sectional view of an optical signal reading apparatus in accordance with a second exemplary embodiment of the present invention.
Fig. 6 is a schematic sectional view of the optical signal reading apparatus in accordance with the second exemplary embodiment.
Fig. 7 is a schematic sectional view of the optical signal reading apparatus in accordance with the third exemplary embodiment.
Fig. 8 is a schematic view of a system comprising a plurality of optical signal reading apparatuses in accordance with a fourth exemplary embodiment of the present invention.
Fig. 9 is a block diagram of a conventional optical signal reading apparatus.

### DESCRIPTION OF THE PREFERRED EMBODIMENTS

Embodiments of the present invention will be described hereinafter with reference to the accompanying drawings.

### Embodiment 1

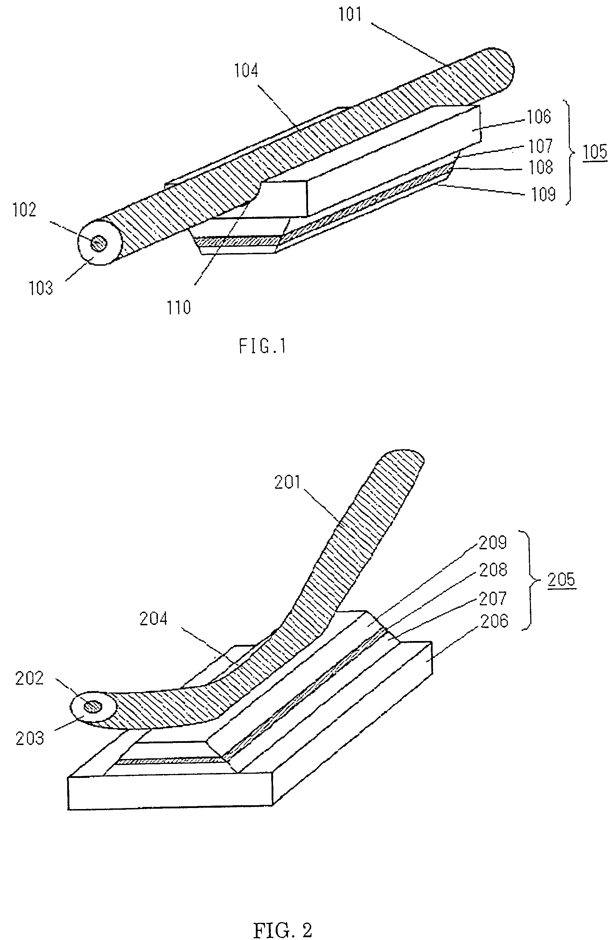

Referring now to Fig. 1, Fig. 3, and Fig. 4, an optical signal reading apparatus in accordance with the first embodiment is shown.

In Fig. 1, index-of-refraction modulating structure 104 is formed in core 102 of optical fiber 101 close to photoelectric converting element 108. A photodiode is most suitable as photoelectric converting element 108 in consideration of a fundamental specification required for an optical communication system, such as high sensitivity, low noise, wide band, and size compatibility with the optical fiber. The optical signal reading apparatus in accordance with the first embodiment uses a compound semiconductor such as a pin photodiode (pin-PD) or an avalanche photodiode (APD). N-type semiconductor layer 107, i-type semiconductor layer 108 as a photoelectric converting region, and p-type semiconductor layer 109 are formed on semiconductor substrate 106. An optical signal propagates to core 102 of optical fiber 101, and a part of the optical signal leaks out of optical fiber 101 via index-of-refraction modulating structure 104. The leaking optical signal is converted to signal current by photoelectric converting region 108 of photoelectric converting element 105 disposed close to optical fiber 101. Photoelectric converting region 108 is formed slenderly in the direction of the light propagation axis of optical fiber 101 so that light leaking from optical fiber 101 can be photoelectrically converted usefully. Optical fiber positioning groove 110 guides optical fiber 101 to an adequate position in relation to photoelectric converting region 108.

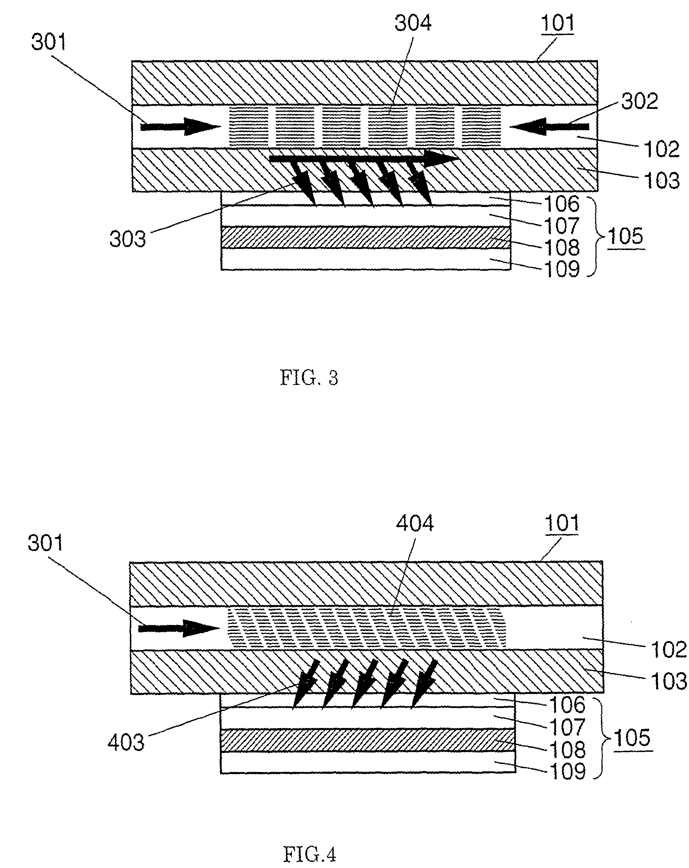

Fig. 3 is a schematic sectional view of the structure shown in Fig. 1. Index-of-refraction modulating structure 304 is formed by, for example, doping germanium on core 102 to provide a photo-refractive material and radiating an ultraviolet laser beam to it through a mask. A modulation period of the index of refraction in embodiment 1 shown in Fig. 3 is set from more than ten µm to more than a hundred µm, and thus so called a long period grating is provided. The long period grating couples a propagation mode of the core to a propagation mode of a cladding, and is different from the grating for radiating diffracted light vertically to the light propagation direction shown in U.S Patent Number 5,299,045. The long period grating converts light propagating through the core to light propagating through the cladding that has low containment ability to intend to leak the light out of the optical fiber. Since the long period grating is formed in the core, the light with 1.3 µm band or 1.5 µm band of optical communication wavelength that propagates through the core shown by arrow 301, 302 couples to the cladding mode and leaks to cladding 103 as shown by arrow 303. This light is guided to photoelectric converting region 108 and taken out as signal current. Degree of the index-of-refraction modulation provided here is set adequately to adjust amount of the taken light.

Wavelength width of the taken signal light can be changed based on the degree of the index-of-refraction modulation, but taking-out efficiency of light is also changed. Optimal designing is therefore more or less difficult. While, in a structure called a chirped grating in which the modulation period of the index of refraction sequentially changes, light with a wavelength width responsive to a system request can be taken out in a wavelength width range from a value less than 1 nm to more than ten nm, regardless of the light taking-out efficiency.

The index-of-refraction modulating structure is formed in the core in embodiment 1. However, even when it is formed in not the core but the cladding, the same effect can be obtained because the index-of-refraction modulating structure affects the light propagating through the core and modulates effective index of the core.

Even when the optical signal propagates through optical fiber 101 in the arrow 302 direction reverse to the arrow 301 direction as shown in Fig. 3, the same photoelectric converting element can read the reverse optical signal in the structure in embodiment 1.

Fig. 4 is also a schematic sectional view of the optical signal reading apparatus shown in Fig. 1, but index-of-refraction modulating structure 404 is different from that shown in Fig. 3. Index-of-refraction modulating structure 404 shown in Fig. 4 is short-period gratings in which a wave-number vector direction of index-of-refraction modulation differs from a light propagation axis direction and a modulation period of the index of refraction is 1 µm or less. Light propagating in the arrow 301 direction through index-of-refraction modulating structure 404 is radiated inclinedly downward as shown by arrow 403. Radiation intensity and radiation wavelength width at this time depend on gradient of the wave number vector direction of index-of-refraction modulating structure 404 in relation to the light propagation direction, modulation degree of the index of refraction, and a chirp structure of the index-of-refraction modulating structure. A desired optical signal can be read by designing them adequately. The short-period gratings angled relative to the light propagation axis as shown in embodiment 1 radiates light not isotropically but around a direction satisfying the Bragg reflection condition. The optical signal can be thus taken out efficiently. The long period grating has not such a feature. As shown in U.S Patent Number 5,430,817, even when the long period grating is formed as index-of-refraction modulating structure 404, the optical signal cannot be efficiently taken out because a principle of taking out light is different. As shown in Fig. 4, the wave number vector of index of refraction modulation in structure 404 differs from the light propagation axis.

The index-of-refraction modulating structure is formed in the core in the embodiment shown in Fig. 4. However, even when it is formed in not the core but the cladding, the same effect can be obtained because both of the long period grating and the short period gratings have a characteristic that the index-of-refraction modulating structure of the cladding affects the light propagating through the core and modulates effective index of the core.

Diameter of a normal optical fiber is 125 µm, diameter of the core is about 10 µm, and thickness of the cladding is about 60 µm. Thickness of the photodiode, for example the back-surface-incident-type photodiode shown in embodiment 1, is generally about 100 µm. An interval between the core and the photoelectric converting region is about 60-200 µm. In such short interval, the light radiated from the core can be sufficiently guided to the photoelectric converting region at a practical efficiency. When the main surface of a semiconductor substrate 106 of the photoelectric converting element is polished in a groove shape as shown in Fig. 1; distance between photoelectric converting region 108 and core 102 becomes shorter to improve reading efficiency.

The back-surface-incident-type photodiode is used in embodiment 1, but a photodiode comprising a p-type semiconductor layer, an i-type semiconductor layer as the photoelectric converting region, an n-type semiconductor layer, and a semiconductor substrate in the order from the optical fiber can be used.

In embodiment 1, an optical signal leaking from the light transmission path that has the core having the index-of-refraction modulating structure is detected and read by the photoelectric converting element. The photoelectric converting element is close to the index-of-refraction modulating structure and has a light receiving surface in parallel with the light propagation axis. Embodiment 1, unlike a prior art as shown in Fig. 9, does not require light/electricity conversion or electricity/light conversion on the way of the propagation of the optical signal, and reduces the number of components.

### Embodiment 2

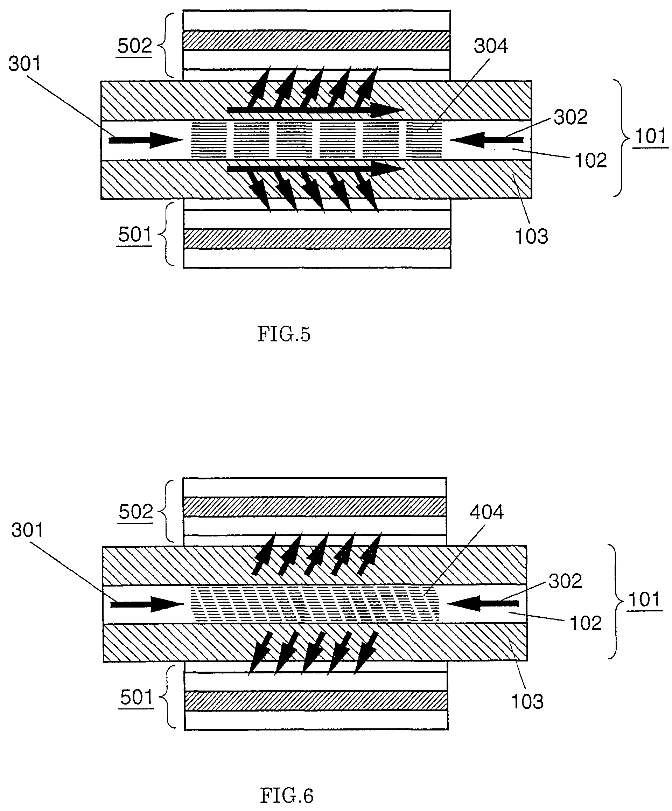

Referring now to Fig. 5 and Fig. 6, an optical signal reading apparatus in accordance with the second embodiment is shown.

The optical signal reading apparatus shown in Fig. 5 differs from that shown in Fig. 3 in that photodiodes 501, 502 as photoelectric converting elements are disposed over and under a part of optical fiber 101 having index-of-refraction modulating structure 304 in the long period grating type. Amount of optical signal detected by the photoelectric converting elements doubles, and reading efficiency of the optical signal can be improved. When two or more photodiodes are further disposed around the optical fiber, reading efficiency of the optical signal can be further improved.

The optical signal reading apparatus shown in Fig. 6 differs from that shown in Fig. 5 in that index-of-refraction modulating structure 404 consists of short period gratings of which wave-number vector direction are different from a light propagation axis direction. In this structure, a part of an optical signal propagating in optical signal propagation direction 301 is reflected on index-of-refraction modulating structure 404 and coupled to photodiode 501. An optical signal propagating in optical signal propagation direction 302 is similarly coupled to photodiode 502. The structure in the present invention can separate and read the optical signal propagating through the optical fiber.

Embodiment 2 uses the optical fiber, but may use a light waveguide instead of the optical fiber to provide a similar effect.

### Embodiment 3

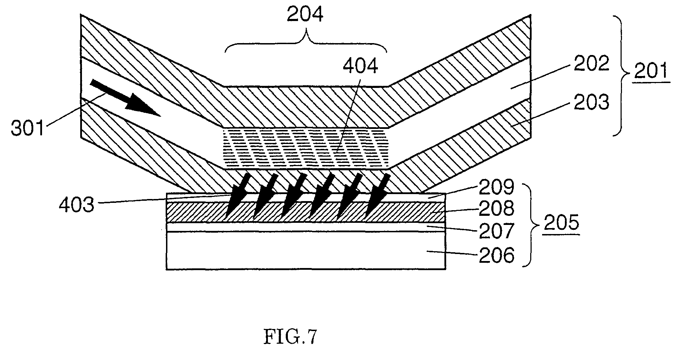

Referring now to Fig. 2 and Fig. 7, an optical signal reading apparatus in accordance with the third embodiment is shown.

In Fig. 2, thin part 204 of a cladding of optical fiber 201 is mounted to photoelectric converting element 205. Thickness of the cladding at the mounting part is reduced to about 10 µm. Index-of-refraction modulating structure 404 is formed in core 202 at thin part 204 of the cladding

A photodiode is most suitable as photoelectric converting element 205, in consideration of a fundamental specification required for an optical communication system, such as high sensitivity, low noise, wide band, and size compatibility with the optical fiber. The optical signal reading apparatus in accordance with the third embodiment also uses a compound semiconductor such as a pin photodiode (pin-PD) or an avalanche photodiode (APD). Photoelectric converting element 205 comprises p-type semiconductor layer 209, i-type semiconductor layer 208 as a photoelectric converting region, n-type semiconductor layer 207, and semiconductor substrate 206 in that order from optical fiber 201.

Fig. 7 shows a schematic sectional view of the optical signal reading apparatus shown in Fig. 2. Core 202 at a position facing to photoelectric converting element 205 includes index-of-refraction modulating structure 404. Modulating structure 404 includes short period gratings angled relative to the light propagation axis similarly to embodiment 1 shown in Fig. 4. Light propagating in the arrow 301 direction is radiated inclinedly downward as shown by arrow 403, similarly to embodiment 1. In embodiment 3, a part of the cladding close to photoelectric converting element 205 is thinner than a part of the cladding that is not close to photoelectric converting element 205. Therefore, distance between the core and photoelectric converting region 208 is shorter to increase conversion efficiency to an electric signal. This is same as the effect that semiconductor 106 of photoelectric converting element 105 is drilled in a groove shape to shorten the distance between the core and photoelectric converting region 208 and therefore the conversion efficiency to the electric signal is improved.

Embodiment 3 uses the optical fiber, but may use a light waveguide instead of the optical fiber to provide a similar effect.

### Embodiment 4

Referring now to Fig. 8, a system in accordance with the forth embodiment is shown.

The system comprises optical fiber 801 and optical signal reading apparatuses 802 in accordance with the present invention. As discussed above, optical signal 803 propagating through optical fiber 801, even when passes through optical signal reading apparatuses 802, simply losses extremely small amount of optical power required for reading, and is not further affected. When a plurality of optical signal reading apparatuses 802 are disposed on a transmission path of the optical fiber as shown in Fig. 8, the same optical signal can be converted to electric signal 804 and read in each installation position. A structure simpler than the conventional system comprising an optical coupler and a photoelectric converting element can realize the same function. The present invention can advantageously address an interactive signal in this structure. This cannot be achieved in the conventional system.

Embodiment 4 uses the optical fiber, but may use a light waveguide instead of the optical fiber to provide a similar effect.

As discussed above, the present invention can advantageously read the contents of an optical signal in a simple structure with hardly affecting the optical signal propagating through the optical fiber.

## Claims

1. An optical signal reading apparatus comprising:
a light transmission path having gratings provided along said light transmission path so that index of refraction along said light transmission path changes; and
a photoelectric converting element situated along said light transmission path to receive light leaking from said light transmission path.

2. An optical signal reading apparatus to claim 1 wherein said index of refraction along said light transmission path changes periodically.

3. An optical signal reading apparatus comprising:
a light transmission path having an index-of-refraction modulating structure, the index-of-refraction modulating structure having periodically changing index of refraction along a light transmission path; and
a photoelectric converting element situated along said light transmission path to receive light leaking from said light transmission path.

4. The optical signal reading apparatus according to claim 3 wherein a wave-number vector direction of the index-of-refraction modulating structure differs from a direction of the light propagation axis of said light transmission path.

5. The optical signal reading apparatus according to claim 4 wherein the index-of-refraction modulating structure consists of short period gratings with 1 µm or less of modulation period of index of refraction.

6. The optical signal reading apparatus according to claim 3 wherein the index-of-refraction modulating structure reflects a part of light propagating through said light transmission path.

7. The optical signal reading apparatus according to claim 4 wherein the index-of-refraction modulating structure reflects a part of light propagating through said light transmission path.

8. The optical signal reading apparatus according to claim 3 wherein said light transmission path includes a cladding and a part of the cladding of said light transmission path close to said photoelectric converting element is thinner than the cladding except for the part close to said photoelectric converting element.

9. The optical signal reading apparatus according to claim 4 wherein said light transmission path includes a cladding and a part of the cladding of said light transmission path close to said photoelectric converting element is thinner than the cladding except for the part close to said photoelectric converting element.

10. The optical signal reading apparatus according to claim 6 wherein said light transmission path includes a cladding and a part of the cladding of said light transmission path close to said photoelectric converting element is thinner than the cladding except for the part close to said photoelectric converting element.

11. The optical signal reading apparatus according to claim 7 wherein said light transmission path includes a cladding and a part of the cladding of said light transmission path close to said photoelectric converting element is thinner than the cladding except for the part close to said photoelectric converting element.

12. The optical signal reading apparatus according to claim 3 wherein a photoelectric converting region of said photoelectric converting element has a plane shape extending along said light transmission path.

13. The optical signal reading apparatus according to claim 4 wherein a photoelectric converting region of said photoelectric converting element has a plane shape extending along said light transmission path.

14. The optical signal reading apparatus according to claim 5 wherein a photoelectric converting region of said photoelectric converting element has a plane shape extending along said light transmission path.

15. The optical signal reading apparatus according to claim 6 wherein a photoelectric converting region of said photoelectric converting element has a plane shape extending along said light transmission path.

16. The optical signal reading apparatus according to claim 7 wherein a photoelectric converting region of said photoelectric converting element has a plane shape extending along said light transmission path.

17. The optical signal reading apparatus according to claim 8 wherein a photoelectric converting region of said photoelectric converting element has a plane shape extending along said light transmission path.

18. The optical signal reading apparatus according to claim 9 wherein a photoelectric converting region of said photoelectric converting element has a plane shape extending along said light transmission path.

19. The optical signal reading apparatus according to claim 3 wherein said photoelectric converting element includes a structure for guiding said light transmission path to a predetermined position.

20. The optical signal reading apparatus according to claim 4 wherein said photoelectric converting element includes a structure for guiding said light transmission path to a predetermined.

21. The optical signal reading apparatus according to claim 5 wherein said photoelectric converting element includes a structure for guiding said light transmission path to a predetermined.

22. The optical signal reading apparatus according to claim 6 wherein said photoelectric converting element includes a structure for guiding said light transmission path to a predetermined.

23. The optical signal reading apparatus according to claim 7 wherein said photoelectric converting element includes a structure for guiding said light transmission path to a predetermined.

24. The optical signal reading apparatus according to claim 8 wherein said photoelectric converting element includes a structure for guiding said light transmission path to a predetermined.

25. The optical signal reading apparatus according to claim 9 wherein said photoelectric converting element includes a structure for guiding said light transmission path to a predetermined.

26. The optical signal reading apparatus according to claim 3,
wherein a photoelectric converting region of said photoelectric converting element has a plane shape extending along said light transmission path,
wherein said photoelectric converting element includes a structure for guiding said light transmission path to a predetermined position.

27. The optical signal reading apparatus according to claim 4,
wherein a photoelectric converting region of said photoelectric converting element has a plane shape extending along said light transmission path,
wherein said photoelectric converting element includes a structure for guiding said light transmission path to a predetermined position. .

28. The optical signal reading apparatus according to claim 5,
wherein a photoelectric converting region of said photoelectric converting element has a plane shape extending along said light transmission path,
wherein said photoelectric converting element includes a structure for guiding said light transmission path to a predetermined position. .

29. The optical signal reading apparatus according to claim 6,
wherein a photoelectric converting region of said photoelectric converting element has a plane shape extending along said light transmission path,
wherein said photoelectric converting element includes a structure for guiding said light transmission path to a predetermined position. .

30. The optical signal reading apparatus according to claim 7,
wherein a photoelectric converting region of said photoelectric converting element has a plane shape extending along said light transmission path,
wherein said photoelectric converting element includes a structure for guiding said light transmission path to a predetermined position. .

31. The optical signal reading apparatus according to claim 8,
wherein a photoelectric converting region of said photoelectric converting element has a plane shape extending along said light transmission path,
wherein said photoelectric converting element includes a structure for guiding said light transmission path to a predetermined position. .

32. The optical signal reading apparatus according to claim 9,
wherein a photoelectric converting region of said photoelectric converting element has a plane shape extending along said light transmission path,
wherein said photoelectric converting element a structure for guiding said light transmission path to a predetermined position. .

33. An optical signal reading apparatus comprising:
a light transmission path having an index-of-refraction modulating structure, the index-of-refraction modulating structure having periodically changing index of refraction along a light transmission path; and
a photoelectric converting element having a groove for adhering to said light transmission path, said photoelectric converting element situated along said light transmission path to receive light leaking from said light transmission path.

34. The optical signal reading apparatus according to claim 33 wherein a wave-number vector direction of the index-of-refraction modulating structure differs from a direction of the light transmission path.

35. The optical signal reading apparatus according to claim 34 wherein the index-of-refraction modulating structure consists of short period gratings with 1 µm or less of modulation period of index of refraction.

36. The optical signal reading apparatus according to claim 1, where the gratings are angled relative to a light propagation axis of said light transmission path.
